# EUROPEAN PATENT SPECIFICATION

(11) **EP 2 395 414 B1**
(45) Date of publication and mention of the grant of the patent: **13.08.2014**
(21) Application number: 10165743.5
(22) Date of filing: 11.06.2010
(51) Int. Cl.: G06F 3/01, G06F 3/041

(54) **Portable electronic device including touch-sensitive display and method of changing tactile feedback**
Tragbare elektronische Vorrichtung mit berührungsempfindlicher Anzeige und Verfahren zur Änderung des taktilen Feedbacks
Dispositif électronique potable incluant un affichage tactile et procédé pour modifier le retour d'informations tactiles

(43) Date of publication of application: 14.12.2011
(73) Proprietor: BlackBerry Limited, Waterloo, ON N2K 0A7 (CA)
(72) Inventor: Pasquero, Jerome, Waterloo Ontario N2L 3W8 (CA)
(74) Representative: Fennell, Gareth Charles

(56) References cited:
- EP-A1- 1 462 917
- US-A1- 2004 021 663
- US-A1- 2004 204 129
- US-A1- 2010 013 775

## Description

### FIELD OF TECHNOLOGY

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

EP 1 462 917 discloses a touch panel threshold pressure set up method, in which multiple touches are performed when the setup is run, and with this, multiple threshold pressure values are obtained. The obtained multiple pressure values are averaged to obtain an average pressure value, and the average pressure value or a multiplier of the average pressure value is used as a threshold pressure value for the touch panel.

Improvements in devices with touch-sensitive displays are desirable.

### SUMMARY

A method includes detecting touches on a touch-sensitive display, determining force values for the touches, and changing an intensity of tactile feedback provided utilizing the touch-sensitive display based on the force values. An electronic device includes at least one force sensor arranged to determine a force value for the touch, an actuator arranged to impart a force on the touch-sensitive display to provide tactile feedback, and at least one processor, operably coupled to the touch-sensitive display, the at least one force sensor, and the actuator, and configured to change an intensity of the tactile feedback provided based on an average of a plurality of force values, the plurality of force values including the force value for the touch.

### BRIEF DESCRIPTION OF THE DRAWINGS

FIG. 1 is a block diagram of a portable electronic device in accordance with the present disclosure.
FIG. 2 is a sectional side view of a portable electronic device with piezoelectric actuators in accordance with the disclosure.
FIG. 3 is a sectional side view of a portable electronic device with a depressed touch-sensitive display in accordance with the disclosure.
FIG. 4 is a sectional side view of a piezoelectric actuator in accordance with the disclosure.
FIG. 5 is a sectional side view of a piezoelectric actuator with a force sensor in accordance with the disclosure.
FIG. 6 is a block diagram including force sensors and actuators of the portable electronic device 100 in accordance with the disclosure.
FIG. 7 is a flowchart illustrating a method of changing tactile feedback in accordance with the disclosure.
FIG. 8 is a graph illustrating voltage/charge at a piezo actuator over time in accordance with the disclosure.
FIG. 9 is a graph illustrating voltage/charge at a piezo actuator over time in accordance with the disclosure.

### DETAILED DESCRIPTION

The following describes an electronic device and method including detecting touches on a touch-sensitive display, determining force values for the touches, and changing tactile feedback based on the force values.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

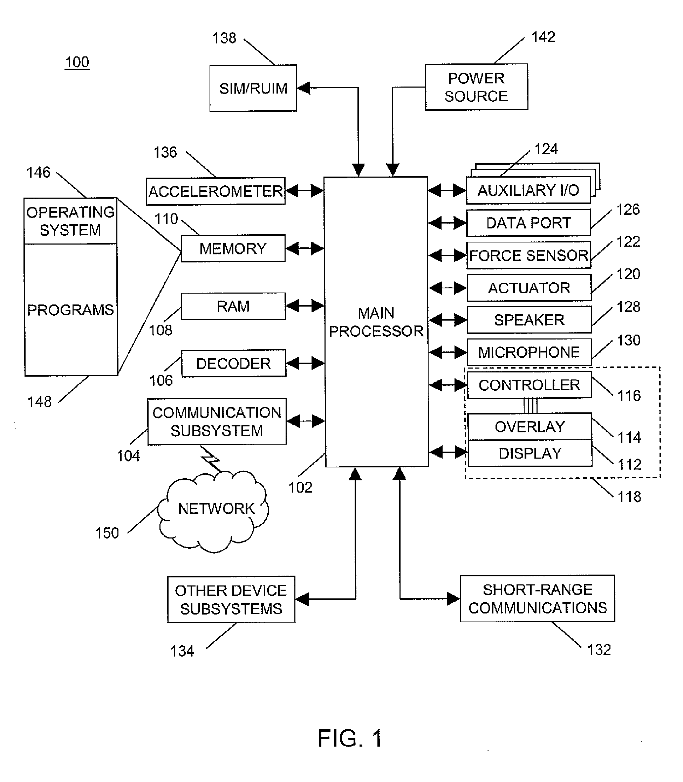

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. The controller 116 and/or the processor 102 may detect a touch by any suitable contact member on the touch-sensitive display 118. Multiple simultaneous touches may be detected.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback. Other different types of actuators 120 may be utilized than those described herein. When force is applied, the touch-sensitive display 118 is depressible, pivotable, and/or movable.

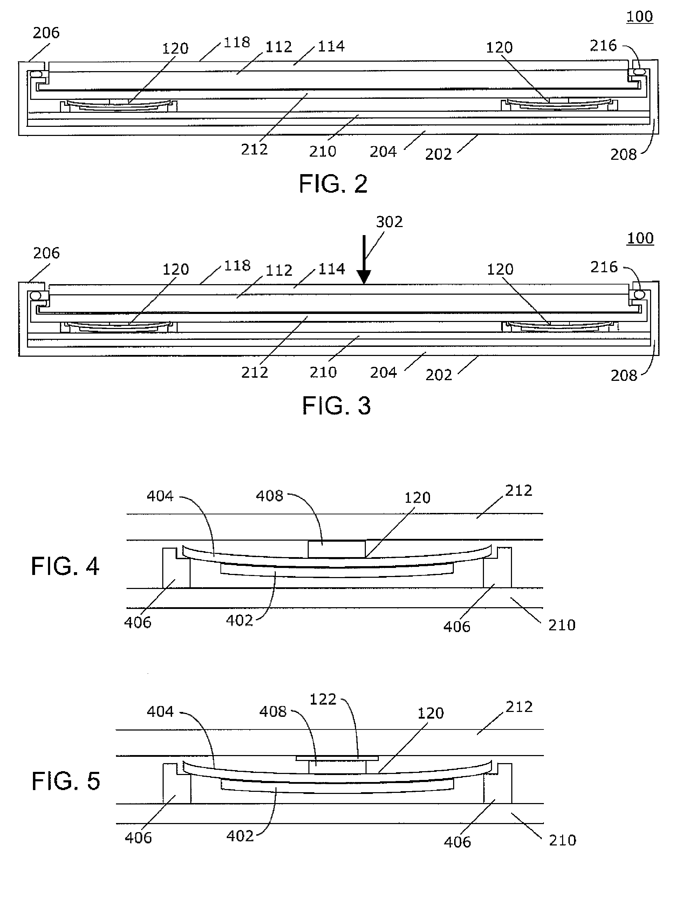

A cross section of a portable electronic device 100 taken through the centers of piezoelectric ("piezo") actuators 120 is shown in FIG. 2. The portable electronic device 100 includes a housing 202 that encloses components such as shown in FIG. 1. The housing 202 may include a back 204, sidewalls 208, and a frame 206 that houses the touch-sensitive display 118. A base 210 extends between the sidewalls 208, generally parallel to the back 204, and supports the actuators 120. The display 112 and the overlay 114 are supported on a support tray 212 of suitable material, such as magnesium. Optional spacers 216 may be located between the support tray 212 and the frame 206, may advantageously be flexible, and may also be compliant or compressible, and may comprise gel pads, spring elements such as leaf springs, foam, and so forth.

The touch-sensitive display 118 is moveable and depressible with respect to the housing 202. A force 302 applied to the touch-sensitive display 118 moves, or depresses, the touch-sensitive display 118 toward the base 210. When sufficient force is applied, the actuator 120 is depressed or actuated as shown in FIG. 3. The touch-sensitive display 118 may also pivot within the housing to depress the actuator 120. The actuators 120 may be actuated by pressing anywhere on the touch-sensitive display 118. The processor 102 receives a signal when the actuator 120 is depressed or actuated.

A cross section taken through the center of a piezo actuator 120 is shown in FIG. 4. The actuator 120 may comprise one or more piezo devices or elements 402. The piezo actuator 120 is shown disposed between the base 210 and the touch-sensitive display 118. The piezo actuator 120 includes a piezoelectric element 402, such as a piezoelectric ceramic disk, fastened to a substrate 404, for example, by adhesive, lamination, laser welding, and/or by other suitable fastening method or device. The piezoelectric material may be lead zirconate titanate or any other suitable material. Although the piezo element 402 is a ceramic disk in this example, the piezoelectric material may have any suitable shape and geometrical features, for example a non-constant thickness.

The substrate 404, which may also be referred to as a shim, may be comprised of a metal, such as nickel, or any other suitable material such as, for example, stainless steel, brass, and so forth. The substrate 404 bends when the piezo element 402 contracts diametrically, as a result of build up of voltage/charge across the piezo element 402 or in response to a force, such as an external force applied to the touch-sensitive display 118.

The substrate 404 and piezo element 402 may be suspended or disposed on a support 406 such as a ring-shaped frame for supporting the piezo element 402 while permitting flexing of the piezo actuator 120 as shown in FIG. 4. The supports 406 may be disposed on the base 210 or may be part of or integrated with the base 210, which may be a printed circuit board. Optionally, the substrate 404 may rest on the base 210, and each actuator 120 may be disposed, suspended, or preloaded in an opening in the base 210. The actuator 120 is not fastened to the support 406 or the base 210 in these embodiments. The actuator 120 may optionally be fastened to the support 406 through any suitable method, such as adhesive or other bonding methods.

A pad 408 may optionally be disposed between the piezo actuator 120 and the touch-sensitive display 118. The pad 408 in the present example is a compressible element that may provide at least minimal shock-absorbing or buffering protection and may comprise suitable material, such as a hard rubber, silicone, and/or polyester, and/or other materials. The pad 408 is advantageously flexible and resilient and may provide a bumper or cushion for the piezo actuator 120 as well as facilitate actuation of the piezo actuator 120 and/or one or more force sensors 122 that may be disposed between the piezo actuators 120 and the touch-sensitive display 118. When the touch-sensitive display 118 is depressed, the force sensor 122 generates a force signal that is received and interpreted by the microprocessor 102. The pad 408 is advantageously aligned with a force sensor 122 to facilitate the focus of forces exerted on the touch-sensitive display 118 onto the force sensors 122. The pads 408 transfer forces between the touch-sensitive display 118 and the actuators 120 whether the force sensors 122 are above or below the pads 408. The pads 408 facilitate provision of tactile feedback from the actuators 120 to the touch-sensitive display 118 without substantially dampening the force applied to or on the touch-sensitive display 118.

An optional force sensor 122 may be disposed between the piezo actuator 120 and the touch-sensitive display 118 as shown in FIG. 5. The force sensor 122 may be disposed between the touch-sensitive display 118 and the pad 408 or between the pad and the piezo actuator 120, to name a few examples. The force sensors 122 may be force-sensitive resistors, strain gauges, piezoelectric or piezoresistive devices, pressure sensors, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. A piezoelectric device, which may be the piezo element 402, may be utilized as a force sensor.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

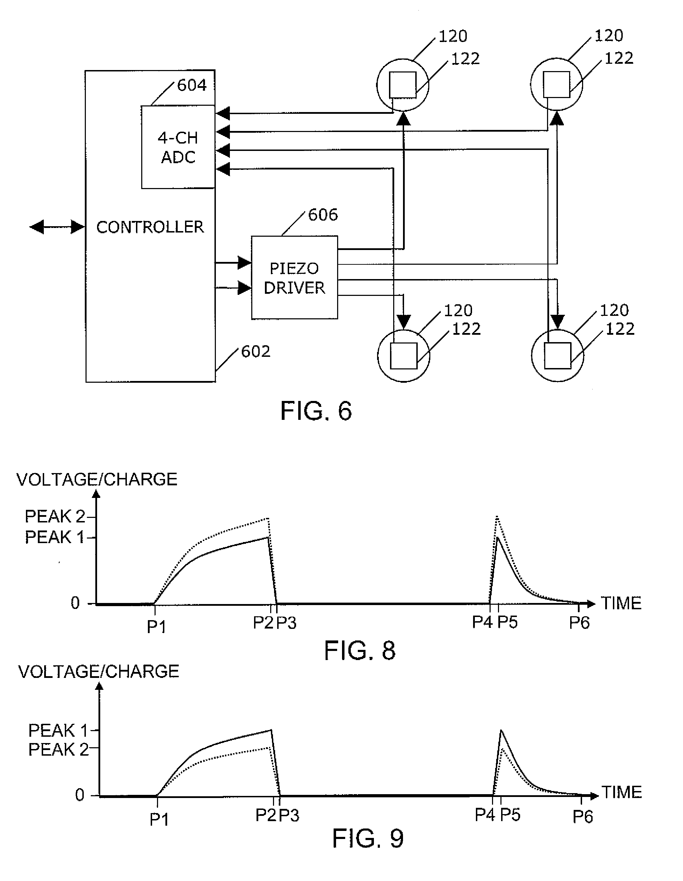

A block diagram including force sensors and actuators of the portable electronic device 100 is shown in FIG. 6. In this example, each force sensor 122 is electrically connected to a controller 602, which includes an amplifier and analog-to-digital converter (ADC) 604. Each force sensor 122 may be, for example, a force-sensing resistor wherein the resistance changes as force applied to the force sensor 122 changes. As applied force on the touch-sensitive display 118 increases, the resistance decreases. This change is determined via the controller 116 for each of the force sensors 122, and a value representative of the force at each of the force sensors 122 may be determined.

The piezo actuators 120 are electrically coupled to a piezo driver 604 that communicates with the controller 602. The controller 602 is also in communication with the main processor 102 of the portable electronic device 100 and may exchange signals with the main processor 102. The piezo actuators 120 and the force sensors 122 are operatively coupled to the main processor 102 via the controller 602. The controller 602 controls the piezo driver 606 that controls the current/voltage to the piezoelectric devices 402 of the actuator 120, and thus the controller 602 controls the force applied by the piezo actuators 120 on the touch-sensitive display 118. The piezoelectric devices 402 may be controlled individually via a separate control line between each actuator 120 and the controller 602. Different signals may be sent to each different actuator 120. Alternatively, the piezoelectric devices 402 may be controlled substantially equally and concurrently, for example, by the same signal that may be provided through a common control line that extends to each actuator 120 or by individual control lines such as shown in FIG. 6.

The tactile feeling of switches, actuators, keys, other physical objects, and so forth may be simulated, or a non-simulated tactile feedback may be provided by controlling the piezoelectric devices 402. For example, when a force applied on the touch-sensitive display 118 exceeds a depression threshold, the voltage/charge at the piezo actuators 120 is modified such that the piezo actuator 120 imparts a force on the touch-sensitive display 118, which force may, for example, simulate depression of a dome switch. When the force applied on the touch-sensitive display 118 falls below a release threshold, the voltage/charge at the piezo actuators 120 is modified such that the piezo actuator 120 imparts a force or discontinues imparting a force on the touch-sensitive display 118, which may, for example, simulate release of a dome switch.

Tactile feedback may be perceived differently by different users depending on tactile sensitivity of the user. Tactile sensitivity varies depending on the user and may also vary based on conditions during use, such as temperature and humidity. Users generally press with greater force when tactile feedback is weak and press with lesser force when tactile feedback is strong.

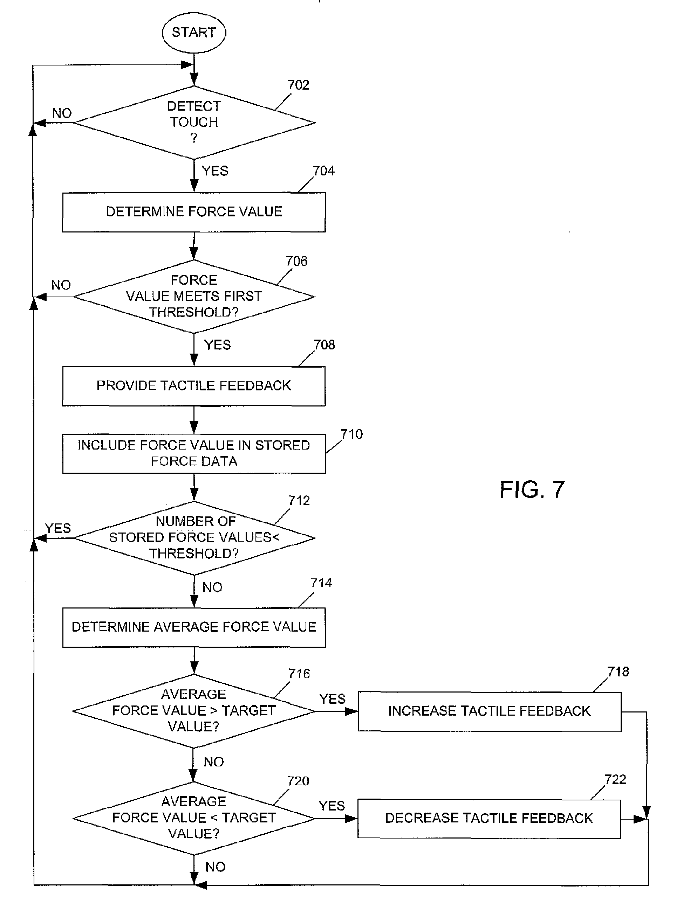

A flowchart illustrating a method of changing tactile feedback at an electronic device, such as the portable electronic device 100, is shown in FIG. 7. The method may be carried out by computer-readable code executed, for example, by the processor 102. Computer-readable code executable by at least one processor of the portable electronic device to perform the method may be stored in a computer-readable medium. Coding of software for carrying out such a method is within the scope of a person of ordinary skill in the art given the present description. The method may contain additional or fewer processes than shown and/or described, and may be performed in a different order.

When a touch is detected 702, the location of touch on the touch-sensitive display 118 is determined. Signals from the force sensors 122 are received, and a force value for the touch is determined 704 based on the signals from the force sensors 122. The touch may be associated with a selectable feature such as a key of a keyboard or any other suitable feature. The force value for the touch is a value determined based on the signals from the force sensors 122 during the touch and includes a value representative of applied force of the touch. The force value may be determined, for example, by summing the forces at each of the force sensors 122 when a single touch is received. Multiple force values may be determined for each touch as the force value is repeatedly determined, for example, at regular intervals during the touch.

When the force value determined during the touch does not meet the first threshold at 706, the process continues at 702, and the force values are not utilized to change tactile feedback at the portable electronic device 100. A value meets a threshold when the value is at or beyond the threshold. Force values determined during, for example, light touches on the touch-sensitive display 118, swipes and other gestures are not utilized in changing tactile feedback. When the force value meets the first threshold at 706, depression of the touch-sensitive display is detected and the process continues at 708.

Tactile feedback is provided 708. For example, the depression of a dome switch may be simulated by the piezo actuators 120 and when the force applied on the touch-sensitive display 118 is reduced such that the force value meets a second threshold, which second threshold is lower than the first threshold, release of a dome switch may be simulated. Optionally, a feature may also be selected at 708.

The force value, that is determined to meet the first threshold, is included 710 in force data stored in suitable memory, such as the RAM 108 or the memory 110. The force data may include many force values from previous touches and are stored to accumulate multiple force values for use in changing the tactile feedback. When the number of stored force values is less than a threshold number at 712, the process continues at 702. When the number of stored force values is not less than the threshold number at 712, the process continues at 714.

An average of the force values stored in memory at the portable electronic device 100, is determined 714. The average may be, for example, an arithmetic mean, a truncated mean, a median force value, or any other suitable average. The average may also be a weighted average, for example, such that the force values of the more recent touches are given a higher weighting than force values of less recent touches. The stored force values may be removed from memory when the average value is determined. Further force values determined during further touches may be stored again in memory for further changes to the tactile feedback.

The average force value is compared 716 to a high target value and when the average force value is greater than the high target value, the tactile feedback is increased 718. The high target value is a value determined based on factors including the actuators utilized. For example, the high target value is determined to utilize a suitable force to simulate depression of a dome switch while inhibiting or reducing damage to the actuator that may occur with use of the portable electronic device 100 over time. Tactile feedback may be increased by increasing an intensity or amplitude of the tactile feedback. The amplitude may be increased by increasing the current/voltage to the piezoelectric devices 402 to increase the force imparted by the piezo actuators 120 on the touch-sensitive display 118. The peak voltage/charge at the piezo actuators 120 is higher, during simulation of depression and release of a dome switch, after increasing the tactile feedback. The amount that the tactile feedback is increased may be a set incremental change or may be based on the difference between the average force and the high target value such that the percentage increase is greater when the difference between the average force value and the high target value is greater. The tactile feedback may be increased within a suitable operating range such that tactile feedback is not increased to a level that significantly shortens the useful life of or causes damage to the piezo actuators 120.

When the average force value is less than a low target value at 720, the tactile feedback is decreased 722. The low target value is a value determined, e.g., based on factors including the actuators utilized. For example, the low target value is determined to utilize a suitable force to simulate depression of a dome switch while inhibiting or reducing damage to the actuator that may occur with use of the portable electronic device 100 over time. Tactile feedback may be decreased by decreasing amplitude of the tactile feedback. The amplitude may be decreased by decreasing the voltage/charge at the piezoelectric devices 402 to decrease the force imparted by the piezo actuators 120 on the touch-sensitive display 118. The peak voltage/charge at the piezo actuators 120 is lower, during simulation of depression and release of a dome switch, after decreasing the tactile feedback. The amount that the tactile feedback is decreased may be a set incremental change or may be based on the difference between the average force and the low target value such that the percentage decrease is greater when the difference between the average force value and the low target value is greater. The tactile feedback may be decreased within a suitable operating range to provide a desired feedback to the user. Decreasing the voltage/charge at the piezo actuators 120 may reduce damage to the actuators and save power.

A high target value and a low target value are described above with reference to 716 and 720. The high target value is higher than the low target value to provide a target range of force. Alternatively, the high target value may be equal to the low target value.

In the above description, a single touch is described. The method of FIG. 7 is also applicable to multiple touches that overlap in time. When multiple touches that overlap in time are received, the force value at each touch may be determined utilizing any suitable method based on the force values determined at each of the force sensors 122, the location of each of the force sensors 122, and the locations of the touches. The process may continue for each touch.

A graph illustrating an example of voltage/charge at the piezo actuators 120 over time is shown in FIG. 8. The voltage/charge curve before a change in tactile feedback is made is illustrated by the solid line in FIG. 8. The force value meets the first force threshold at P1 and the voltage/charge is ramped up to the peak at P2. The voltage/charge is decreased from P2 to P3 to simulate depression of a dome switch. The force value meets the second force threshold at P4 and the voltage/charge is increased from P4 to P5 to simulate release of a dome switch. The voltage/charge is decreased from P5 to P6. The average force value of a plurality of touches is compared to the target value and the average force value is determined to be greater than the target value. The tactile feedback is increased to provide tactile feedback with a higher peak voltage/charge, as illustrated by the dotted line in FIG. 8.

A graph illustrating another example of voltage/charge at the piezo actuators 120 over time is shown in FIG. 9. The voltage/charge curve before a change in tactile feedback is made is illustrated by the solid line in FIG. 9. The force value meets the first force threshold at P1 and the voltage/charge is ramped up to the peak at P2. The voltage/charge is decreased from P2 to P3 to simulate depression of a dome switch. The force value meets the second force threshold at P4 and the voltage/charge is increased from P4 to P5 to simulate release of a dome switch. The voltage/charge is decreased from P5 to P6. The average force value of a plurality of touches is compared to the target value and the average force value is determined to be less than the target value. The tactile feedback is decreased to provide tactile feedback with a lower peak voltage/charge, as illustrated by the dotted line in FIG. 9.

As shown in FIG. 8 and FIG. 9, when tactile feedback is increased or decreased, the tactile feedback for the various points on the voltage/charge curve is changed. Tactile feedback may remain at this changed intensity for the next provision of tactile feedback, after which the intensity may be maintained until further changes to the intensity are made, i,e., the change is a "long-term" change. Alternatively, the tactile feedback may return to its previous intensity before the change 718, 722, i.e., the change is a "short-term" change.

Alternatively, tactile feedback may be adjusted to decrease the time during which tactile feedback is provided and provide pulses that are shorter in duration, or to increase the time during which tactile feedback is provided to provide pulses that are longer in duration. For example, the time between P1 and P3 and/or the time between P4 and P6 may be adjusted.

The process of storing force values in memory and determining an average force value when the number of force values stored meets a threshold number, is optional. Rather than comparing an average force to the high target value at 716 and the low target value at 720, the force value determined to exceed the first threshold at 706 may be compared to the high target value at 716 and to the low target value at 720 and the tactile feedback may be changed based on the comparison.

Tactile feedback may be adjusted based on a value related to the force, referred to herein as a force value, for a touch on the touch-sensitive display 118. Useful and desirable tactile feedback may be provided by adjusting the tactile feedback, for example, by changing a peak amplitude. Tactile feedback may be changed to compensate for changes during the lifetime of the portable electronic device or changes in environmental conditions or use. Tactile feedback is desirable to provide positive feedback of, for example, selection of a feature. This positive feedback may reduce errors, such as erroneous double entry of characters during typing, reducing device use time and decreasing power consumption. Adjusting to provide useful tactile feedback may reduce the chance of receipt of a force that causes damage to the actuator or other components of the electronic device. By adjusting the tactile feedback, a compromise may be reached at which the voltage/charge at the actuator is low to reduce power consumption and reduce damage to the actuator while reducing the chance that the actuator is damaged by user-applied force. Adjusting the tactile feedback may provide a better user experience with the portable electronic device 100.

The present disclosure may be embodied in other specific forms without departing from its essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
detecting touches on a touch-sensitive display (118);
determining force values for the touches;
changing an intensity of tactile feedback provided through the touch-sensitive display (118) based on an average of the force values.

2. The method according to claim 1, wherein changing an intensity of tactile feedback comprises changing amplitude of the tactile feedback.

3. The method according to claim 1, wherein changing an intensity of tactile feedback comprises changing based on a comparison of the average to a target value.

4. The method according to claim 3, wherein changing an intensity of tactile feedback comprises increasing amplitude of the tactile feedback when the average exceeds the target value.

5. The method according to claim 3, wherein changing an intensity of tactile feedback comprises decreasing amplitude of the tactile feedback when the average is less than the target value.

6. The method according to claim 3, wherein changing an intensity of tactile feedback comprises changing amplitude by an amount based on a difference between the average and the target value.

7. The method according to claim 1, wherein the average comprises an average of the force values that meet a threshold.

8. The method according to claim 1, comprising providing tactile feedback for each of the force values that meets a threshold.

9. The method according to claim 8, wherein the tactile feedback simulates depression of a dome switch.

10. The method according to claim 1, wherein changing an intensity of tactile feedback comprises changing when the force values for a threshold number of touches are collected.

11. A computer-readable medium having computer-readable code executable by at least one processor (102) of an electronic device (100) to perform the method according to any one of claims 1 to 10.

12. An electronic device (100) comprising:
a touch-sensitive display (118);
at least one force sensor (122) arranged to determine a force value for a touch detected on the touch-sensitive display (118);
an actuator (120) arranged to impart a force on the touch-sensitive display (118) to provide tactile feedback;
at least one processor (102), operably coupled to the touch-sensitive display (118), the at least one force sensor (122), and the actuator (120), and configured to change an intensity of the tactile feedback provided based on an average of a plurality of force values, the plurality of force values including the force value for the touch.

13. The electronic device (100) according to claim 13, wherein the actuator (120) comprises at least one piezo actuator.

14. The electronic device (100) according to claim 13, wherein the processor (102) is configured to change an intensity of the tactile feedback by changing amplitude of the tactile feedback.

15. The electronic device (100) according to claim 13, wherein the processor (102) is configured to change an intensity of the tactile feedback by an amount based on a difference between the average and a target value.

## Patentansprüche

1. Ein Verfahren, das aufweist:
Erfassen von Berührungen auf einer berührungsempfindlichen Anzeige (118);
Bestimmen von Kraftwerten für die Berührungen;
Ändern einer Intensität einer taktilen Rückmeldung, die vorgesehen ist durch die berührungsempfindliche Anzeige (118) basierend auf einem Durchschnitt der Kraftwerte.

2. Das Verfahren gemäß Anspruch 1, wobei das Ändern einer Intensität der taktilen Rückmeldung ein Ändern einer Amplitude der taktilen Rückmeldung aufweist.

3. Das Verfahren gemäß Anspruch 1, wobei das Ändern einer Intensität der taktilen Rückmeldung ein Ändern basierend auf einem Vergleich des Durchschnitts zu einem Zielwert aufweist.

4. Das Verfahren gemäß Anspruch 3, wobei das Ändern einer Intensität der taktilen Rückmeldung ein Erhöhen einer Amplitude der taktilen Rückmeldung aufweist, wenn der Durchschnitt den Zielwert übersteigt.

5. Das Verfahren gemäß Anspruch 3, wobei das Ändern einer Intensität der taktilen Rückmeldung ein Verringern einer Amplitude der taktilen Rückmeldung aufweist, wenn der Durchschnitt geringer ist als der Zielwert.

6. Das Verfahren gemäß Anspruch 3, wobei das Ändern einer Intensität der taktilen Rückmeldung ein Ändern der Amplitude um einen Betrag basierend auf einer Differenz zwischen dem Durchschnitt und dem Zielwert aufweist.

7. Das Verfahren gemäß Anspruch 1, wobei der Durchschnitt einen Durchschnitt der Kraftwerte aufweist, die eine Schwelle erreichen.

8. Das Verfahren gemäß Anspruch 1, das aufweist ein Vorsehen einer taktilen Rückmeldung für jeden der Kraftwerte, der eine Schwelle erreicht.

9. Das Verfahren gemäß Anspruch 8, wobei die taktile Rückmeldung ein Drücken eines Kuppelschalters simuliert.

10. Das Verfahren gemäß Anspruch 1, wobei ein Ändern einer Intensität der taktilen Rückmeldung ein Ändern aufweist, wenn die Kraftwerte für eine Schwellenanzahl von Berührungen gesammelt sind.

11. Ein computerlesbares Medium mit computerlesbarem Code, der durch zumindest einen Prozessor (102) einer elektronischen Vorrichtung (100) ausführbar ist, um das Verfahren gemäß einem der Ansprüche 1 bis 10 durchzuführen.

12. Eine elektronische Vorrichtung (100), die aufweist:
eine berührungsempfindliche Anzeige (118);
zumindest einen Kraftsensor (122), der ausgebildet ist zum Bestimmen eines Kraftwerts für eine Berührung, die auf der berührungsempfindlichen Anzeige (118) erfasst wird;
einen Aktuator (120), der ausgebildet ist zum Ausüben einer Kraft auf die berührungsempfindliche Anzeige (118), um eine taktile Rückmeldung vorzusehen;
zumindest einen Prozessor (102), der betriebsfähig mit der berührungsempfindlichen Anzeige (118), dem zumindest einen Kraftsensor (122) und dem Aktuator (120) gekoppelt ist und konfiguriert ist zum Ändern einer Intensität der vorgesehenen taktilen Rückmeldung basierend auf einem Durchschnitt einer Vielzahl von Kraftwerten, wobei die Vielzahl von Kraftwerten den Kraftwert für die Berührung umfasst.

13. Die elektronische Vorrichtung (100) gemäß Anspruch 13, wobei der Aktuator (120) zumindest einen Piezo-Aktuator aufweist.

14. Die elektronische Vorrichtung (100) gemäß Anspruch 13, wobei der Prozessor (102) konfiguriert ist zum Ändern einer Intensität der taktilen Rückmeldung durch Ändern einer Amplitude der taktilen Rückmeldung.

15. Die elektronische Vorrichtung (100) gemäß Anspruch 13, wobei der Prozessor (102) konfiguriert ist zum Ändern einer Intensität der taktilen Rückmeldung um einen Betrag basierend auf einer Differenz zwischen dem Durchschnitt und einem Zielwert.

## Revendications

1. procédé comprenant, le fait de :
détecter les touchers sur un écran tactile (118) ;
déterminer des valeurs de force pour les touchers ;
changer une intensité du retour tactile prévu à travers l'écran tactile (118) sur la base d'une moyenne de valeurs de force.

2. Procédé selon la revendication 1, dans lequel le changement d'une intensité du retour tactile comprend un changement d'amplitude du retour tactile.

3. Procédé selon la revendication 1, dans lequel le changement d'une intensité du retour tactile comprend un changement sur la base d'une comparaison de la moyenne à une valeur cible.

4. Procédé selon la revendication 3, dans lequel le changement d'une intensité du retour tactile comprend l'augmentation d'amplitude du retour tactile lorsque la moyenne dépasse la valeur cible.

5. Procédé selon la revendication 3, dans lequel le changement d'une intensité du retour tactile comprend la diminution d'amplitude du retour tactile lorsque la moyenne est inférieure la valeur cible.

6. Procédé selon la revendication 3, dans lequel le changement d'une intensité du retour tactile comprend un changement d'amplitude par une quantité sur la base d'une différence entre la moyenne et une valeur cible.

7. Procédé selon la revendication 1, dans lequel la moyenne comprend une moyenne de valeurs de force qui satisfont un seuil.

8. Procédé selon la revendication 1, comprenant le fait de prévoir un retour tactile pour chacune des valeurs de force qui satisfont un seuil.

9. Procédé selon la revendication 8, dans lequel le retour tactile simule une pression d'un commutateur en dôme.

10. Procédé selon la revendication 1, dans lequel le changement d'une intensité du retour tactile comprend un changement lorsque les valeurs de force pour un nombre seuil de touchers sont collectées.

11. Support lisible par ordinateur ayant un code lisible par ordinateur exécutable par au moins un processeur (102) d'un dispositif électronique (100) pour réaliser le procédé selon l'une quelconque des revendications 1 à 10.

12. Dispositif électronique (100) comprenant :
un écran tactile (118) ;
au moins un capteur de force (122) agencé pour déterminer une valeur de force pour un toucher détecté sur l'écran tactile (118) ;
un actionneur (120) agencé pour transmettre une force sur l'écran tactile (118) pour prévoir un retour tactile ;
au moins un processeur (102), couplé de manière fonctionnelle à l'écran tactile (118), à l'au moins un capteur de force (122), et à l'actionneur (120), et configuré pour changer une intensité du retour tactile prévu sur la base d'une moyenne d'une pluralité de valeurs de force, la pluralité de valeurs de force comportant la valeur de force pour le toucher.

13. Dispositif électronique (100) selon la revendication 13, dans lequel l'actionneur (120) comprend au moins un actionneur piézoélectrique.

14. Dispositif électronique (100) selon la revendication 13, dans lequel le processeur (102) est configuré pour changer une intensité du retour tactile en changeant l'amplitude du retour tactile.

15. Dispositif électronique (100) selon la revendication 13, dans lequel le processeur (102) est configuré pour changer une intensité du retour tactile par une quantité sur la base d'une différence entre la moyenne et une valeur cible.
